# FASCICULE DE BREVET EUROPEEN

(11) **EP 3 717 767 B1**
(45) Date de publication et mention de la délivrance du brevet: **24.02.2021**
(21) Numéro de dépôt: 18826426.1
(22) Date de dépôt: 29.11.2018
(51) Int. Cl.: F02K 9/08, F02K 9/24, F02K 9/34

(54) **PROPULSEUR D'APPOINT À ARCHITECTURE OPTIMISÉE**
ZUSÄTZLICHER BOOSTER MIT OPTIMIERTER ARCHITEKTUR
AUXILIARY BOOSTER WITH OPTIMISED ARCHITECTURE

(30) Priorité: 01.12.2017 FR 1701269
(43) Date de publication de la demande: 07.10.2020
(73) Titulaire: ArianeGroup SAS, 75015 Paris (FR)
(72) Inventeur: CUCCO, Nicolas, 33170 Gradignan (FR); DEYTS, Jean-Baptiste, 1426 Concise (CH); LAVEZE, Pierre, 33110 Le Bouscat (FR); LARRIEU, Jean-Michel, 33460 Macau (FR)
(74) Mandataire: Cabinet Beau de Loménie
(86) Numéro de dépôt international: PCT/FR2018/053053
(87) Numéro de publication internationale: WO 2019/106312

(56) Documents cités:
- US-A- 3 017 746
- US-A- 4 911 795
- US-A- 5 217 187
- US-A1- 2004 144 886

## Description

### Arrière-plan de l'invention

L'invention concerne le domaine des propulseurs à propergol solide et, plus particulièrement, les propulseurs d'appoint destinés à être fixés sur le corps principal d'un lanceur.

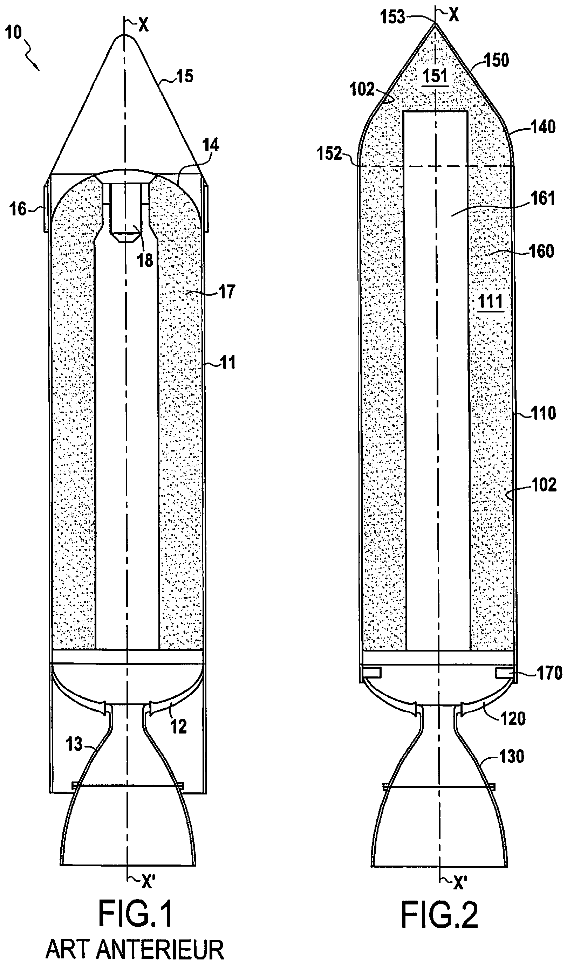

Comme illustré sur la figure 1, un propulseur d'appoint 10 comprend une enveloppe 11 présentant une forme cylindrique s'étendant dans une direction longitudinale entre un fond arrière 12 en communication avec une tuyère 13 et un fond avant 14 fermé. L'enveloppe 11, qui constitue le réservoir du propulseur d'appoint, renferme un chargement de propergol solide 17, un dispositif d'initiation 18 étant présent au niveau du fond avant 14 de l'enveloppe. Le fond avant 14 de l'enveloppe 11 est couvert avec une coiffe ou structure conique 15 qui assure une protection aérodynamique du fond avant. La coiffe 15 est fixée sur l'enveloppe 11 au moyen d'une jupette 16 rapportée sur le fond avant 14 de l'enveloppe.

Le document US 5 131 610 divulgue un propulseur d'appoint de ce type. Les documents US2004/144886 et US3017746 divulguent d'autre propulseurs d'appoint selon l'art antérieur.

La liaison entre la jupette 16 et le fond avant de l'enveloppe 11, d'une part, et la liaison entre la coiffe 15 et la jupette 16, d'autre part, doivent présenter une excellente tenue mécanique afin de résister aux charges aérodynamiques auxquelles le propulseur d'appoint est soumis. Ces pièces ainsi que leur liaison sont couteuses et complexes à mettre en œuvre.

Or, il existe un besoin pour des propulseurs d'appoint à propergol solide présentant des coûts de fabrication réduits.

### Objet et résumé de l'invention

Ce but est atteint grâce à un propulseur d'appoint à propergol solide destiné à être fixé sur le corps principal d'un lanceur, le propulseur comprenant un corps cylindrique s'étendant dans une direction longitudinale entre un fond arrière en communication avec une tuyère et un fond avant formé par une structure conique reliée au corps cylindrique du propulseur, le corps cylindrique délimitant un premier volume interne et la structure conique du fond avant délimitant un deuxième volume interne, ledit propulseur d'appoint renfermant un chargement de propergol solide, caractérisé en ce que le premier volume interne du corps cylindrique communique avec le deuxième volume interne de la structure conique, en ce que le chargement de propergol solide est présent à la fois dans les premier et deuxième volumes internes et en ce que le propulseur d'appoint comprend en outre un dispositif d'allumage du chargement de propergol solide présent au niveau du fond arrière dudit propulseur d'appoint.

En réalisant une structure conique dans le prolongement du corps cylindrique du propulseur, on simplifie grandement l'architecture de la partie avant du propulseur notamment car il n'est plus nécessaire de rapporter une jupette pour assurer la liaison entre le corps du propulseur et l'élément de protection aérodynamique ni d'avoir à gérer des liaisons délicates entre trois éléments (enveloppe du propulseur, jupette et coiffe).

En outre, en réunissant le volume interne du corps cylindrique avec le volume interne de la structure conique, on augmente la capacité de chargement en propergol solide du propulseur d'appoint. Par conséquent, pour un volume de chargement donnée, il est possible de réaliser des propulseurs d'appoint de plus petites dimensions et d'en réduire ainsi encore le coût de fabrication.

Par ailleurs, en plaçant un dispositif d'allumage du chargement de propergol solide au niveau du fond arrière du propulseur d'appoint, cela permet notamment d'optimiser le volume de chargement dans l'ensemble formé par le corps cylindrique et la structure conique.

Selon un mode de réalisation du propulseur d'appoint de l'invention, le corps cylindrique et la structure conique du fond avant sont en matériau métallique.

Selon un autre mode de réalisation du propulseur d'appoint de l'invention, le corps cylindrique et la structure conique du fond avant sont en un matériau composite à matrice organique.

L'invention a également pour objet un procédé de fabrication d'un propulseur d'appoint à propergol solide destiné à être fixé sur le corps principal d'un lanceur, le propulseur comprenant un corps cylindrique s'étendant dans une direction longitudinal entre un fond arrière en communication avec une tuyère et un fond avant formé par une structure conique reliée au corps cylindrique du propulseur, le corps cylindrique délimitant un premier volume interne et la structure conique du fond avant délimitant un deuxième volume interne, ledit propulseur d'appoint renfermant un chargement de propergol solide, caractérisé en ce que le procédé comprend la réalisation d'un ensemble comprenant le corps cylindrique et la structure conique formant le fond avant du propulseur, le premier volume interne du corps cylindrique communiquant avec le deuxième volume interne de la structure conique, en ce que le chargement de propergol solide est présent à la fois dans les premier et deuxième volumes internes, et en ce qu'un dispositif d'allumage du chargement de propergol solide est placé au niveau de la zone arrière dudit propulseur d'appoint.

Selon un mode de réalisation de l'invention, l'ensemble comprenant le corps cylindrique et la structure conique du fond avant est réalisé en matériau métallique, la structure conique étant fixée par soudage ou brasage ou autre liaison mécanique à l'extrémité amont du corps cylindrique.

Selon une caractéristique particulière du procédé de l'invention, le corps cylindrique et la structure conique du fond avant sont chacun chargés de propergol solide avant ou après leur assemblage.

Selon une caractéristique particulière du procédé de l'invention, le corps cylindrique est réalisé par assemblage d'une pluralité de segments de virole cylindrique, chaque segment étant chargé de propergol solide avant ou après son assemblage avec un autre segment.

Selon un autre mode de réalisation de l'invention, l'ensemble comprenant le corps cylindrique et la structure conique du fond avant sont réalisés en matériau composite à matrice organique Le corps cylindrique et la structure conique peuvent être réalisés ensemble, c'est-à-dire en une seule pièce. Le corps cylindrique et la structure conique peuvent être également réalisés séparément et assemblés ensuite l'un avec l'autre, le corps cylindrique et la structure conique pouvant être chargé avec du propergol solide avant ou après leur assemblage. Le corps cylindrique peut être également réalisé à partir de segments de virole fabriqués indépendamment les uns des autres et assemblés ensuite, les segments pouvant être chargés avec du propergol solide avant ou après leur assemblage.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en coupe d'un propulseur d'appoint selon l'art antérieur,
- la figure 2 est une schématique en coupe d'un propulseur d'appoint conformément à un mode de réalisation de l'invention,
- les figures 3A à 3D montrent des étapes de fabrication du propulseur d'appoint de la figure 2,
- la figure 4 montre une alternative de fabrication du propulseur de la figure 2,
- la figure 5 est une schématique en coupe d'un propulseur d'appoint conformément à un mode de réalisation de l'invention,
- les figures 6A à 6D montrent des étapes de fabrication du propulseur d'appoint de la figure 4,
- la figure 7 montre une alternative de fabrication du propulseur de la figure 5.

### Description détaillée de modes de réalisation

La figure 2 montre un propulseur d'appoint 100 conformément à un mode réalisation de l'invention. Le propulseur d'appoint 100 comprend un corps cylindrique 110 s'étendant dans une direction longitudinale X-X' entre une partie ou zone arrière 120 qui, dans l'exemple décrit ici, est en communication avec une tuyère 130 et un fond avant 140 formé par une structure conique 150 reliée au corps cylindrique 110 du propulseur.

Dans ce mode de réalisation, le corps cylindrique 110 et la structure conique 150 formant le fond avant 140 sont réalisés en matériau métallique, par exemple en acier ou titane ou aluminium.

Le corps cylindrique 110 délimite un premier volume interne 111 tandis que la structure conique 150 du fond avant 140 délimite un deuxième volume interne 151. Conformément à l'invention, le premier volume interne 111 du corps cylindrique 110 communique avec le deuxième volume interne 151 de la structure conique 150. Toujours conformément à l'invention, un chargement de propergol solide 160 est présent à la fois dans les premier et deuxième volumes internes 111 et 151. En d'autres termes, dans la présente invention, l'enveloppe du réservoir du propulseur d'appoint est constitué à la fois par le corps cylindrique 110 et la structure conique 150 du fond avant 140 qui forment ensemble (réunion des premier et deuxième volumes internes 111 et 151) un volume commun occupé par le chargement de propergol solide 160 à la différence des propulseurs d'appoint de l'art antérieur comme celui décrit dans le document US 5 131 610 et dans lesquels l'enveloppe formant le réservoir pour propergol solide est fermée au niveau de l'extrémité avant du corps cylindrique empêchant une communication entre le volume interne du corps cylindrique et la structure conique rapportée sur le fond avant du propulseur d'appoint.

Une couche d'un matériau de protection thermique 102 est présente sur la surface interne du corps cylindrique 110 et de la structure conique 150.

Le chargement de propergol solide 160 comporte un canal central 161 s'étendant dans la direction longitudinal X-X' et formant une chambre de combustion ainsi qu'un conduit de circulation des gaz chaux issus de la combustion du propergol en direction de la tuyère 130.

Dans l'exemple décrit ici, le chargement de propergol 160 est notamment présent dans tout le volume interne 151 de la structure conique, c'est-à-dire depuis l'extrémité arrière 152 jusqu'à l'extrémité avant 153 de la structure conique 150. Toujours dans l'exemple décrit ici, le canal central 161 présent dans le chargement de propergol solide 160 s'interrompt à une position intermédiaire située entre l'extrémité arrière 152 et l'extrémité avant 153 de la structure conique 150. Le canal central peut également s'étendre jusqu'à l'extrémité avant 153 de la structure conique 150.

Le propulseur 100 comprend en outre un dispositif d'allumage 170 du chargement de propergol solide 160 présent à l'intérieur du corps cylindrique au voisinage de la zone arrière 120 du propulseur.

Le propulseur 100 peut comprendre encore un dispositif d'accrochage arrière (non représenté sur la figure 2) qui, selon la conception spécifique du propulseur d'appoint est situé au niveau de la jupe de la zone arrière ou de la partie inférieure du corps cylindrique 110 et un dispositif d'accrochage avant (non représenté sur la figure 2) qui, selon la conception spécifique du propulseur d'appoint est situé au niveau de la structure conique 150 ou de la partie supérieure du corps cylindrique 110. Les dispositifs d'accrochage sont destinés à permettre la fixation du propulseur d'appoint sur le corps principal d'un lanceur (non représenté sur la figure 2).

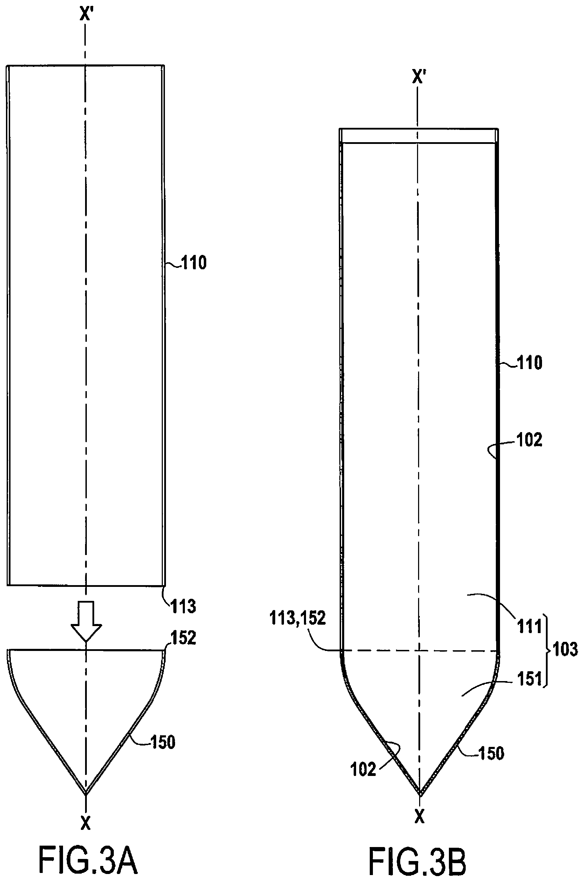

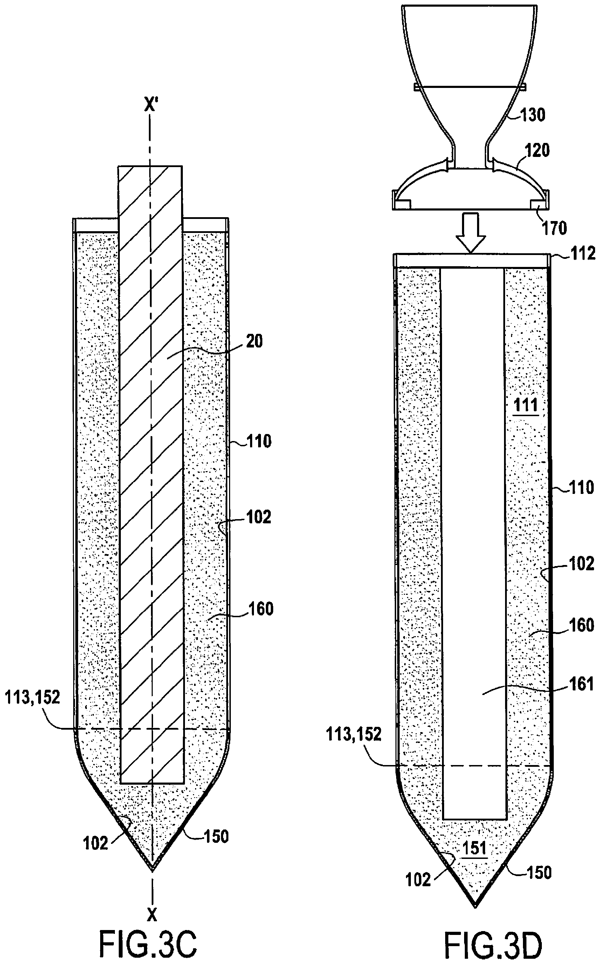

Comme illustré sur les figures 3A à 3D, pour la fabrication du propulseur d'appoint 100, on réalise de manière indépendante à partir d'un matériau métallique deux pièces correspondant respectivement au corps cylindrique 110 et à la structure conique 150 (figure 3A). Le corps cylindrique 110 et la structure conique 150 sont ensuite assemblés en fixant l'extrémité arrière 152 de la structure conique 150 à l'extrémité avant 113 du corps cylindrique 110 par soudage ou brasage ou autre assemblage mécanique (figure 3B). Après avoir formé la couche de matériau de protection thermique 102 sur la surface interne du corps cylindrique 110 et de la structure conique 150, on coule le chargement de propergol solide 160 dans le volume interne commun 103 constitué par la réunion du volume interne 111 du corps cylindrique 110 et du volume interne 151 de la structure conique 150 (figure 3B) en utilisant un outillage 20 permettant de ménager le canal central 161 dans le chargement (figure 3C). On fixe ensuite la zone arrière 120, ici équipée de la tuyère 130 et du dispositif d'allumage 170 sur l'extrémité arrière 112 du corps cylindrique 110 par soudage ou brasage ou autre liaison mécanique (figure 3D). On obtient alors le propulseur d'appoint 100 tel que représenté sur la figure 2.

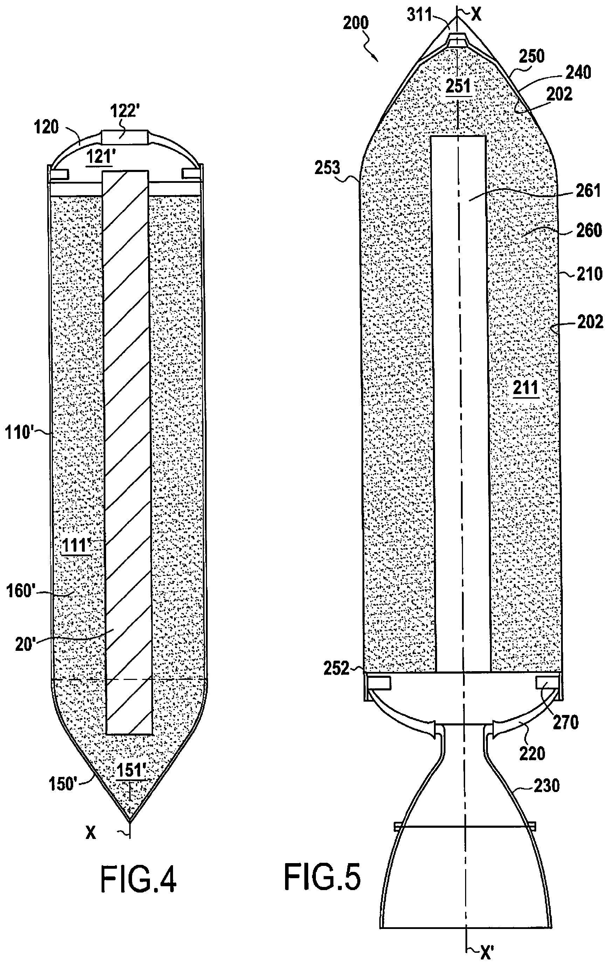

Selon une variante de réalisation illustrée en figure 4, le corps cylindrique 110', la structure conique 150' et la zone arrière 120' sont assemblés avant le remplissage du propulseur avec le propergol solide. Dans ce cas, le propergol solide 160' est coulé dans le volume interne commun constitué par la réunion du volume interne 111' du corps cylindrique 110', du volume interne 151' de la structure conique 150' et éventuellement tout ou partie du volume interne 121' de la zone arrière 120'. Le propergol solide est coulé à travers l'ouverture 122' présente sur la zone arrière 120' et en utilisant un outillage 20' permettant de ménager le canal central dans le chargement de propergol solide 160'.

Selon encore une variante de réalisation du propulseur d'appoint 100, le corps cylindrique 110 et la structure conique 150 peuvent être chacun chargé avec du propergol solide avant leur assemblage.

Selon encore une autre variante de réalisation du propulseur d'appoint 100, le corps cylindrique 110 est réalisé par assemblage d'une pluralité de segments de virole cylindrique, chaque segment étant chargé de propergol solide avant sont assemblage avec un autre segment.

La figure 5 illustre un propulseur d'appoint 200 selon un autre mode de réalisation de l'invention et qui diffère du propulseur d'appoint 100 décrit ci-avant en ce qu'au moins le corps cylindrique et la structure conique formant le fond avant du propulseur sont réalisés en matériau composite, à savoir un renfort fibreux densifié par une matrice.

De même que le propulseur d'appoint 100 décrit précédemment, le propulseur d'appoint 200 comprend un corps cylindrique 210 s'étendant dans une direction longitudinale X-X' entre une partie ou zone arrière 220 qui, dans l'exemple décrit ici, est en communication avec une tuyère 230 et un fond avant 240 formé par une structure conique 250 s'étendant dans le prolongement du corps cylindrique 210 suivant la direction axiale X-X'.

Le corps cylindrique 210 délimite un premier volume interne 211 tandis que la structure conique 250 du fond avant 240 délimite un deuxième volume interne 251. Conformément à l'invention, le premier volume interne 211 du corps cylindrique 210 communique avec le deuxième volume interne 251 de la structure conique 250. Toujours conformément à l'invention, un chargement de propergol solide 260 est présent à la fois dans les premier et deuxième volumes internes 211 et 251.

En d'autres termes, dans la présente invention, l'enveloppe du réservoir du propulseur d'appoint est constitué à la fois par le corps cylindrique 210 et la structure conique 250 du fond avant 240 qui forment ensemble (réunion des premier et deuxième volumes internes 211 et 251) un volume commun occupé par le chargement de propergol solide 260 à la différence des propulseurs d'appoint de l'art antérieur comme celui décrit dans le document US 5 131 610 et dans lesquels l'enveloppe formant le réservoir pour propergol solide est fermée au niveau de l'extrémité avant du corps cylindrique empêchant une communication entre le volume interne du corps cylindrique et la structure conique rapportée sur le fond avant du propulseur d'appoint.

Une couche d'un matériau de protection thermique 202 est présente sur la surface interne du corps cylindrique 210 et de la structure conique 250. Le chargement propergol solide 260 comporte un canal central 261 s'étendant dans la direction longitudinale X-X' et formant une chambre de combustion ainsi qu'un conduit de circulation des gaz chaux issus de la combustion du propergol en direction de la tuyère 230.

Dans l'exemple décrit ici, le chargement de propergol 260 est notamment présent dans tout le volume interne 251 de la structure conique, c'est-à-dire depuis l'extrémité arrière 252 jusqu'à l'extrémité avant 253 de la structure conique 250. Toujours dans l'exemple décrit ici, le canal central 261 présent dans le chargement de propergol solide 260 s'interrompt à une position intermédiaire située entre l'extrémité arrière 252 et l'extrémité avant 253 de la structure conique 250. Le canal central peut également s'étendre jusqu'à l'extrémité avant 253 de la structure conique 250.

Le propulseur 200 comprend en outre un dispositif d'allumage 270 du chargement de propergol solide 260 présent à l'intérieur du corps cylindrique au voisinage du fond arrière 220 du propulseur.

Le propulseur 200 peut comprendre encore un dispositif d'accrochage arrière (non représenté sur la figure 5) qui, selon la conception spécifique du propulseur d'appoint est situé au niveau de la zone arrière 220, de la jupe de la zone arrière ou de la partie inférieure du corps cylindrique 210 et un dispositif d'accrochage avant (non représenté sur la figure 5) qui, selon la conception spécifique du propulseur d'appoint est situé au niveau de la structure conique 250, de la pointe 311 ou de la partie supérieure du corps cylindrique 210. Les dispositifs d'accrochage sont destinés à permettre la fixation du propulseur d'appoint sur le corps principal d'un lanceur (non représenté sur la figure 5).

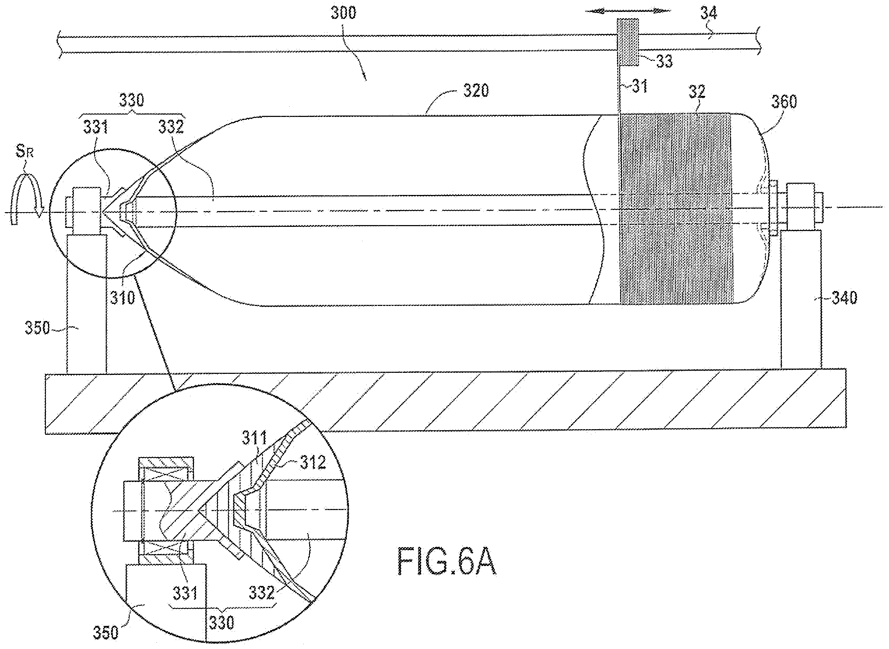

Le corps cylindrique 210 et la structure conique 250 sont réalisés ensemble par bobinage filamentaire comme illustré sur la figure 6A. A cet effet, on utilise un mandrin 300 comportant dans sa partie avant une embase 310 destinée à permettre la formation de la structure conique 250, un cylindre 320 relié à l'embase 310 pour la formation du corps cylindrique 210 et une partie arrière 360 permettant au mandrin 300 d'être supporté sur un arbre rotatif dans sa partie arrière. L'embase 310 comprend une pointe conique 311 destinée à former l'extrémité avant de la structure conique 250 solidaire d'un support conique 312 s'évasant du côté opposé à la pointe conique 311. La pointe conique 311 et le support conique 312 peuvent être réalisés en matériau composite ou métallique.

La pointe conique 311 est maintenue dans un premier élément ou contre-pointe 331 de l'arbre 330 du mandrin 300. Un deuxième élément 332 de l'arbre rotatif 300 est relié à la fois à la surface interne de l'embase 310, c'est-à-dire du côté opposé à celui comportant la pointe 311, et à la partie arrière 360 du cylindre 320. L'arbre 330 est supporté par deux broches 340 et 350 dont au moins l'une d'entre elle comprend un moteur (non représenté) pour entrainer en rotation le mandrin 300 dans le sens indiqué par la flèche S_{R} sur la figure 5A. La broche 340 peut par exemple comprendre un moteur et être solidaire de la partie arrière 360 de manière à entraîner le cylindre 320 en rotation.

Dans l'exemple décrit ici, le corps cylindrique 210 et la structure conique 250 sont réalisés par bobinage en continu d'un fil 31 au moyen d'une tête de bobinage-dépose 33 apte à se déplacer parallèlement à l'axe du mandrin 300 sur un rail 34 de manière à former un enroulement 32 sur le mandrin 300. Le fil 31 est imprégné d'un précurseur de matrice ou de la matrice elle-même. La direction du bobinage sur le mandrin est ajustée en fonction de l'orientation des fils du renfort fibreux que l'on souhaite obtenir. Le corps cylindrique et la structure conique peuvent être également réalisés par drapage de strates fibreuses sur le mandrin 300.

Le corps cylindrique 210, le fond arrière 220 et la structure conique 250 peuvent être notamment réalisés par bobinage ou drapage d'un composite à matrice organique (thermodurcissable ou thermoplastique).

Un bobinage d'une bande d'élastomère peut être réalisé sur le mandrin 300 avant le bobinage filamentaire du fil 31 afin de former la couche interne de matériau de protection thermique 202 du propulseur.

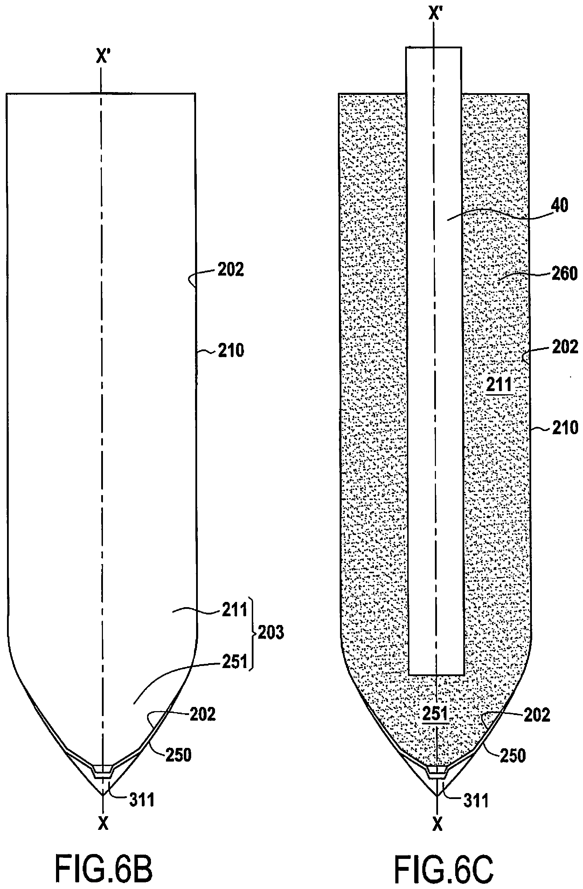

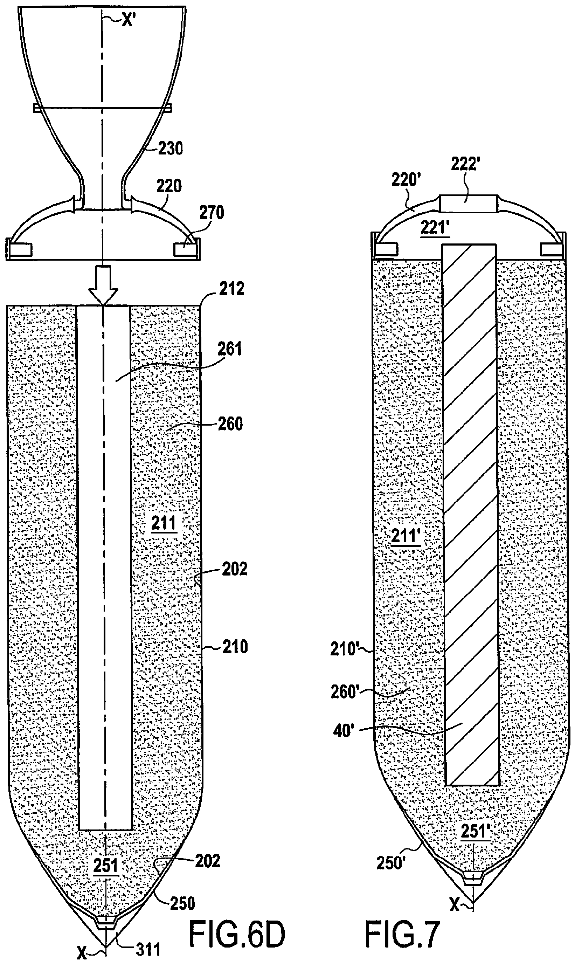

Une fois le bobinage terminé, selon la nature de la matrice, on procède à la polymérisation ou au durcissement de la résine de manière à former une enveloppe structurale comprenant le corps cylindrique 210 et la structure conique 250 comme illustré sur la figure 6B. On coule ensuite le chargement de propergol solide 260 dans le volume interne commun 203 constitué par la réunion du volume interne 211 du corps cylindrique 210 et du volume interne 251 de la structure conique 250 (figure 6B) en utilisant un outillage 40 permettant de ménager le canal central 261 dans le chargement (figure 6C). On fixe ensuite la zone arrière 220, ici équipé de la tuyère 230 et du dispositif d'allumage 270, sur l'extrémité arrière 212 du corps cylindrique 210 par exemple par collage (figure 6D). On obtient alors le propulseur d'appoint 200 tel que représenté sur la figure 4.

Selon une variante de réalisation illustrée en figure 7, le corps cylindrique 210', la structure conique 250' et la zone arrière 220' sont réalisés ensemble ou assemblés avant le remplissage du propulseur avec le propergol solide. Dans ce cas, le propergol solide 260' est coulé dans le volume interne commun constitué par la réunion du volume interne 211' du corps cylindrique 210', du volume interne 251' de la structure conique 250' et éventuellement tout ou partie du volume interne 221' de la zone arrière 220'. Le propergol solide est coulé à travers l'ouverture 222' présente sur la zone arrière 220' et en utilisant un outillage 40' permettant de ménager le canal central dans le chargement de propergol solide 260'.

Le corps cylindrique et la structure conique en matériau composite peuvent être réalisés ensemble, c'est-à-dire en une seule pièce. Le corps cylindrique et la structure conique peuvent être également réalisés séparément et assemblés ensuite l'un avec l'autre, le corps cylindrique et la structure conique pouvant être chargés avec du propergol solide avant ou après leur assemblage. Le corps cylindrique peut être également réalisé à partir de segments de virole fabriqués indépendamment les uns des autres et assemblés ensuite, les segments pouvant être chargés avec du propergol solide avant ou après leur assemblage.

Par ailleurs, les éléments constitutifs du propulseur d'appoint, à savoir le corps cylindrique, la structure conique formant le fond avant et la zone arrière, peuvent être réalisés pour certains en matériau métallique et en matériau composite pour les autres. Par exemple, un propulseur d'appoint de l'invention peut être constitué d'un corps cylindrique en matériau composite avec un fond avant et une zone arrière en matériau métallique.

## Revendications

1. Propulseur d'appoint à propergol solide (100) destiné à être fixé sur le corps principal d'un lanceur, le propulseur comprenant un corps cylindrique (110) s'étendant dans une direction longitudinale (X-X') entre une zone arrière en communication avec une tuyère (130) et un fond avant (140) formé par une structure conique (150) reliée au corps cylindrique du propulseur (110), le corps cylindrique (110) délimitant un premier volume interne (111) et la structure conique (150) du fond avant délimitant un deuxième volume interne (151), ledit propulseur d'appoint renfermant un chargement de propergol solide (160), où le premier volume interne (111) du corps cylindrique (110) communique avec le deuxième volume interne (151) de la structure conique (150), **caractérisé en ce que** le chargement de propergol solide (160) est présent à la fois dans les premier et deuxième volumes internes (111, 151) et **en ce que** le propulseur d'appoint comprend en outre un dispositif d'allumage (170) du chargement de propergol solide (160) présent au niveau de la zone arrière dudit propulseur d'appoint.

2. Propulseur d'appoint selon la revendication 1, dans lequel le corps cylindrique (110) et la structure conique (150) du fond avant (140) sont en matériau métallique.

3. Propulseur d'appoint selon la revendication 1, dans lequel le corps cylindrique (210) et la structure conique (250) du fond avant (240) sont en un matériau composite à matrice organique.

4. Propulseur d'appoint selon la revendication 1, dans lequel le corps cylindrique est en matériau composite et le fond avant en matériau métallique.

5. Procédé de fabrication d'un propulseur d'appoint à propergol solide (100) destiné à être fixé sur le corps principal d'un lanceur, le propulseur comprenant un corps cylindrique (110) s'étendant dans une direction longitudinale (X-X') entre une zone arrière (120) en communication avec une tuyère (130) et un fond avant (140) formé par une structure conique (150) reliée au corps cylindrique du propulseur, le corps cylindrique (110) délimitant un premier volume interne (111) et la structure conique (150) du fond avant (140) délimitant un deuxième volume interne (151), ledit propulseur d'appoint renfermant un chargement de propergol solide (160), **caractérisé en ce que** le procédé comprend la réalisation d'un ensemble comprenant le corps cylindrique (110) et la structure conique (150) formant le fond avant du propulseur, le premier volume interne (111) du corps cylindrique communiquant avec le deuxième volume interne (151) de la structure conique, **en ce que** le chargement de propergol solide (160) est présent à la fois dans les premier et deuxième volumes internes (111, 151) et **en ce qu'**un dispositif d'allumage (170) du chargement de propergol solide (160) est placé au niveau de la zone arrière du propulseur d'appoint.

6. Procédé selon la revendication 5, dans lequel l'ensemble comprenant le corps cylindrique (110) et la structure conique (150) du fond avant est réalisé en matériau métallique, la structure conique étant fixée à l'extrémité amont du corps cylindrique.

7. Procédé selon la revendication 6, dans lequel le corps cylindrique (110) et la structure conique (150) du fond avant sont chacun chargés de propergol solide avant ou après leur assemblage.

8. Procédé selon la revendication 7, dans lequel le corps cylindrique est réalisé par assemblage d'une pluralité de segments de virole cylindrique, chaque segment étant chargé de propergol solide avant ou après son assemblage avec un autre segment.

9. Procédé selon la revendication 5, dans lequel l'ensemble comprenant le corps cylindrique (210) et la structure conique (250) du fond avant sont réalisés en matériau composite à matrice organique sur un mandrin (300) correspondant à la forme dudit ensemble.

10. Procédé selon la revendication 5, dans lequel l'ensemble comprenant le corps cylindrique (110) et la structure conique (150) du fond avant est réalisé en matériau composite à matrice organique, la structure conique étant fixée par liaison mécanique à l'extrémité amont du corps cylindrique.

11. Procédé selon la revendication 5, dans lequel le corps cylindrique est réalisé en matériau composite à matrice organique tandis que la structure conique du fond avant est réalisée en matériau métallique, la structure conique étant fixée par liaison mécanique à l'extrémité amont du corps cylindrique.

12. Procédé selon la revendication 10 ou 11, dans lequel le corps cylindrique (110) et la structure conique (150) du fond avant sont chacun chargés de propergol solide avant ou après leur assemblage.

13. Procédé selon la revendication 10 ou 11, dans lequel le corps cylindrique est réalisé par assemblage d'une pluralité de segments de virole cylindrique, chaque segment étant chargé de propergol solide avant ou après son assemblage avec un autre segment.

## Patentansprüche

1. Zusätzlicher Booster mit festem Treibstoff (100), der zur Befestigung auf dem Hauptkörper einer Trägerrakete bestimmt ist, wobei der Booster einen zylindrischen Körper (110) umfasst, der sich in einer Längsrichtung (X-X') zwischen einer hinteren Zone in Kommunikation mit einer Düse (130) und einem vorderen Boden (140) erstreckt, der von einer konischen Struktur (150) gebildet ist, die mit dem zylindrischen Körper des Boosters (110) verbunden ist, wobei der zylindrische Körper (110) ein erstes Innenvolumen (111) begrenzt und die konische Struktur (150) des vorderen Bodens ein zweites Innenvolumen (151) begrenzt, wobei der zusätzliche Booster eine Ladung festen Treibstoffs (160) einschließt,
wobei das erste Innenvolumen (111) des zylindrischen Körpers (110) mit dem zweiten Innenvolumen (151) der konischen Struktur (150) kommuniziert,
**dadurch gekennzeichnet, dass** die Ladung festen Treibstoffs (160) sowohl in dem ersten und zweiten Innenvolumen (111, 151) vorhanden ist und dass der zusätzliche Booster ferner eine Zündvorrichtung (170) der Ladung festen Treibstoffs (160) umfasst, die im Bereich der hinteren Zone des zusätzlichen Boosters vorhanden ist.

2. Zusätzlicher Booster nach Anspruch 1, wobei der zylindrische Körper (110) und die konische Struktur (150) des vorderen Bodens (140) aus metallischem Material sind.

3. Zusätzlicher Booster nach Anspruch 1, wobei der zylindrische Körper (210) und die konische Struktur (250) des vorderen Bodens (240) aus einem Verbundmaterial mit organischer Matrix sind.

4. Zusätzlicher Booster nach Anspruch 1, wobei der zylindrische Körper aus Verbundmaterial und der vordere Boden aus metallischem Material ist.

5. Verfahren zur Herstellung eines zusätzlichen Boosters mit festem Treibstoff (100), der zur Befestigung auf dem Hauptkörper einer Trägerrakete bestimmt ist, wobei der Booster einen zylindrischen Körper (110) umfasst, der sich in einer Längsrichtung (X-X') zwischen einer hinteren Zone (120) in Kommunikation mit einer Düse (130) und einem vorderen Boden (140) erstreckt, der von einer konischen Struktur (150) gebildet ist, die mit dem zylindrischen Körper des Boosters (110) verbunden ist, wobei der zylindrische Körper (110) ein erstes Innenvolumen (111) begrenzt und die konische Struktur (150) des vorderen Bodens (140) ein zweites Innenvolumen (151) begrenzt, wobei der zusätzliche Booster eine Ladung festen Treibstoffs (160) einschließt, **dadurch gekennzeichnet, dass** das Verfahren die Herstellung einer Einheit umfasst, die den zylindrischen Körper (110) und die konische Struktur (150) umfasst, die den vorderen Boden des Boosters bildet, wobei das erste Innenvolumen (111) des zylindrischen Körpers mit dem zweiten Innenvolumen (151) der konischen Struktur kommuniziert, dass die Ladung festen Treibstoffs (160) sowohl in dem ersten und zweiten Innenvolumen (111, 151) vorhanden ist und dass eine Zündvorrichtung (170) der Ladung festen Treibstoffs (160) im Bereich der hinteren Zone des zusätzlichen Boosters platziert ist.

6. Verfahren nach Anspruch 5, wobei die Einheit, die den zylindrischen Körper (110) und die konische Struktur (150) des vorderen Bodens umfasst, aus metallischem Material hergestellt ist, wobei die konische Struktur am vorgelagerten Ende des zylindrischen Körpers befestigt ist.

7. Verfahren nach Anspruch 6, wobei jeweils der zylindrische Körper (110) und die konische Struktur (150) des vorderen Bodens vor oder nach ihrer Verbindung mit festem Treibstoff geladen werden.

8. Verfahren nach Anspruch 7, wobei der zylindrische Körper durch Verbinden einer Vielzahl zylindrischer Ringsegmente hergestellt wird, wobei jedes Segment vor oder nach seiner Verbindung mit einem anderen Segment mit festem Treibstoff geladen wird.

9. Verfahren nach Anspruch 5, wobei die Einheit, die den zylindrischen Körper (210) und die konische Struktur (250) des vorderen Bodens umfasst, aus Verbundmaterial mit organischer Matrix auf einem Dorn (300) hergestellt sind, der der Form der Einheit entspricht.

10. Verfahren nach Anspruch 5, wobei die Einheit, die den zylindrischen Körper (110) und die konische Struktur (150) des vorderen Bodens umfasst, aus Verbundmaterial mit organischer Matrix hergestellt ist, wobei die konische Struktur durch mechanische Verbindung am vorgelagerten Ende des zylindrischen Körpers befestigt ist.

11. Verfahren nach Anspruch 5, wobei der zylindrische Körper aus Verbundmaterial mit organischer Matrix hergestellt ist, wohingegen die konische Struktur des vorderen Bodens aus metallischem Material hergestellt ist, wobei die konische Struktur durch mechanische Verbindung am vorgelagerten Ende des zylindrischen Körpers befestigt ist.

12. Verfahren nach Anspruch 10 oder 11, wobei jeweils der zylindrische Körper (110) und die konische Struktur (150) des vorderen Bodens vor oder nach ihrer Verbindung mit festem Treibstoff geladen werden.

13. Verfahren nach Anspruch 10 oder 11, wobei der zylindrische Körper durch Verbinden einer Vielzahl von zylindrischen Ringsegmenten hergestellt wird, wobei jedes Segment vor oder nach seiner Verbindung mit einem anderen Segment mit festem Treibstoff geladen wird.

## Claims

1. A solid propellant auxiliary booster (100) intended to be attached to the main body of a launcher, the booster comprising a cylindrical body (110) extending in a longitudinal direction (X-X') between a rear zone in communication with a nozzle (130) and a front face (140) formed by a conical structure (150) connected to the cylindrical body of the booster (110), the cylindrical body (110) delimiting a first internal volume (111) and the conical structure (150) of the front face delimiting a second internal volume (151), said auxiliary booster containing a solid propellant charge (160), wherein the first internal volume (111) of the cylindrical body (110) communicates with the second internal volume (151) of the conical structure (150), **characterized in that** the solid propellant charge (160) is present both in the first and second internal volumes (111, 151) and **in that** the auxiliary booster also comprises an ignition device (170) of the solid propellant charge (160) present at the rear zone of the auxiliary booster.

2. The auxiliary booster according to claim 1, wherein the cylindrical body (110) and the conical structure (150) of the front face (140) are of metallic material.

3. The auxiliary booster according to claim 1, wherein the cylindrical body (210) and the conical structure (250) of the front face (240) are of organic matrix composite material.

4. The auxiliary booster according to claim 1, wherein the cylindrical body is of composite material and the front face of metallic material.

5. Manufacturing method of a solid propellant auxiliary booster (100) intended to be attached to the main body of a launcher, the booster comprising a cylindrical body (110) extending in a longitudinal direction (X-X') between a rear zone (120) in communication with a nozzle (130) and a front face (140) formed by a conical structure (150) connected to the cylindrical body of the booster, the cylindrical body (110) delimiting a first internal volume (111) and the conical structure (150) of the front face (140) delimiting a second internal volume (151), said auxiliary booster containing a solid propellant charge (160), **characterized in that** the method comprises the production of an assembly comprising the cylindrical body (110) and the conical structure (150) forming the front face of the booster, the first internal volume (111) of the cylindrical body communicating with the second internal volume (151) of the conical structure, **in that** the solid propellant charge (160) is present both in the first and second internal volumes (111, 151) and **in that** an ignition device (170) of the solid propellant charge (160) is placed at the rear zone of the auxiliary booster.

6. The method according to claim 5, wherein the cylindrical body (110) and the conical structure (150) of the front face is produced of metallic material, the conical structure being attached to the upstream end of the cylindrical body.

7. The method according to claim 6, wherein each of the cylindrical body (110) and the conical structure (150) of the front face are charged with solid propellant before or after their assembly.

8. The method according to claim 7, wherein the cylindrical body is produced by assembly of a plurality of cylindrical shroud segments, each segment being charged with solid propellant before or after its assembly with another segment.

9. The method according to claim 5, wherein the assembly comprising the cylindrical body (210) and the conical structure (250) of the front face are produced from organic matrix composite material on a mandrel (300) corresponding to the shape of said assembly.

10. The method according to claim 5, wherein the assembly comprising the cylindrical body (110) and the conical structure (150) of the front face is produced of organic matrix composite material, the conical structure being attached by mechanical connection to the upstream end of the cylindrical body.

11. The method according to claim 5, wherein the cylindrical body is produced of organic matrix composite material while the conical structure of the front face is produced of metallic material, the conical structure being attached by mechanical connection to the upstream end of the cylindrical body.

12. The method according to claim 10 or 11, wherein each of the cylindrical body (110) and the conical structure (150) of the front face are charged with solid propellant before or after their assembly.

13. The method according to claim 10 or 11, wherein the cylindrical body is produced by assembly of a plurality of cylindrical shroud segments, each segment being charged with solid propellant before or after its assembly with another segment.
